## Europäisches Patentamt
## European Patent Office
## Office européen des brevets

(11) Veröffentlichungsnummer: **0 101 430**
**B1**

(12) **EUROPÄISCHE PATENTSCHRIFT**

(51) Int. Cl.⁴: **G 03 B 23/00**

(45) Veröffentlichungstag der Patentschrift:
**19.04.89**

(21) Anmeldenummer: **83890128.8**

(22) Anmeldetag: **10.06.83**

(54) Gestell für eine Überblendeinrichtung für zwei Diamagazinprojektoren.

(30) Priorität: **10.06.82 AT 3056/82**

(43) Veröffentlichungstag der Anmeldung:
**22.02.84 Patentblatt 84/8**

(45) Bekanntmachung des Hinweises auf die Patenterteilung:
**19.04.89 Patentblatt 89/16**

(84) Benannte Vertragsstaaten:
**BE CH DE FR GB IT LI NL SE**

(56) Entgegenhaltungen:
**DE-A-1 911 775**
**FR-A-2 473 737**
**US-A-3 912 385**

(73) Patentinhaber: **Knibbeler, Guy, Schwertgasse 1, A-1010 Wien (AT)**

(72) Erfinder: **Knibbeler, Guy, Schwertgasse 1, A-1010 Wien (AT)**

(74) Vertreter: **Boeckmann, Peter, Dipl.- Ing., Patentanwälte Dipl.- Ing. Peter Boeckmann, Dipl.- Ing. Leo Brauneiss Strohgasse 10, A-1030 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Gestell für eine Überblendeinrichtung für zwei Diamagazinprojektoren, wobei die beiden Projektoren übereinander auf zwei Auflagern angeordnet sind, die in ihrer relativen Neigung zueinander durch eine Neigungsverstelleinrichtung verstellbar sind.

Die üblichen Diamagazinprojektoren ermöglichen nur das Projizieren einzelner Dias, nicht jedoch die Überblendung zweier Dias. Um einen solchen Überblendungsprozess mit den bekannten Diamagazinprojektoren durchführen zu können, sind zwei derartiger Projektoren erforderlich, deren Lage so justiert werden muß, daß die gewünschte Überblendung erfolgt. Ohne Hilfsmittel ist dieses Justieren sehr umständlich und zeitraubend. Man hat daher bereits Vorrichtungen vorgeschlagen, mit welchen unter Verwendung von zwei Diamagazinprojektoren ein Überblendungsprozess durchgeführt werden kann.

Bei einer bekannten Vorrichtung (US-A-3 240 118) sind zwei Projektoren nebeneinander auf einer gemeinsamen Tragplatte angeordnet. Dadurch werden die überblendeten Dias in horizontaler Richtung verzerrt. Das menschliche Auge ist jedoch an vertikale Verzerrungen besser gewöhnt als an horizontale Verzerrungen, was sich aus dem natürlichen Zusammenlauf von Gebäudekanten, Schriftzügen usw. ergibt. Da außerdem jeder moderne Projektor breiter ist als höher, bedingt die Nebeneinanderanordnung der Projektoren auch den Nachteil, daß die Optiken dieser Projektoren weiter voneinander entfernt liegen als bei einer Übereinanderanordnung, was den Verzerrungsfehler erhöht.

Man hat daher auch bereits vorgeschlagen (US-A-4 148 453), zwei Projektoren übereinander vorzusehen. Die Projektoren sind hiebei in zwei Rahmen angeordnet, die in vertikalen Stehern allseits schwenkbar gelagert und mittels Fixierschrauben in der eingestellten Stellung arretierbar sind. Eine derartige Anordnung ermöglicht es zwar, die Bilder der beiden Projektoren auf einem gemeinsamen Bildschirm zur Deckung zu bringen, also eine Überblendung zu erreichen, jedoch ist auch bei dieser Anordnung die Justierung sehr umständlich durchzuführen. Für diese Justierung sind nämlich die Klemmschrauben, mit welchen die Rahmen an den Stehern befestigt sind, zu lösen, worauf die Rahmen händisch so verschwenkt werden müssen, daß die optische Achse jedes Projektors in die richtige Lage gebracht wird. Die Rahmen müssen dann in dieser Lage bis zum Anziehen der Klemmschrauben händisch gehalten werden.

Ferner ist das aus den miteinander verbundenen Stehern und den Rahmen gebildete Gestell verhältnismäßig schwer und sperrig und daher nicht einfach zu transportieren.

Die vorliegende Erfindung hat sich zur Aufgabe gestellt, ein Gestell für eine Überblendeinrichtung für zwei Diamagazinprojektoren zu schaffen, welches einen einfachen Aufbau besitzt, leicht ist und ohne Schwierigkeiten transportiert werden kann und welches auf einfache Weise eine Justierung der beiden Diaprojektoren ermöglicht. Diese Diaprojektoren sollen hiebei zusammen mit dem Gestell transportiert werden können, ohne daß sich ihre gegenseitige Lage hiebei verändert, so daß am Ort der Vorführung eine Justierung nicht mehr erforderlich ist. Zur Lösung dieser Aufgabe schlägt die Erfindung vor, daß das Auflager für jeden der beiden Projektoren von einer Platte gebildet ist, der der Projektor befestigt ist, wobei einer der beiden Projektoren um ein Zentrum auf der Platte drehbar und in der gewählten Lage befestigbar ist, und daß die beiden Platten durch einen sie verbindenden Quersteg zu einem im Querschnitt U-förmigen Traggestell verbunden sind, wobei die Neigungsverstelleinrichtung an den von den Platten gebildeten auslaufenden Armen des U-förmigen Traggestells angreift.

Diese Neigungsverstelleinrichtung kann hiebei erfindungsgemäß eine wagenheberartige Konstruktion, eine Schere oder ein Spanner sein und ist vorzugsweise mittels Schellen, Druckstücken mit Druckzapfen od. dgl. schwenkbar mit den Platten verbunden.

Zur Verankerung der Projektoren am Gestell kann erfindungsgemäß jeder der beiden Projektoren an seiner Platte an drei im Dreieck angeordneten Stellen, vorzugsweise mit Schrauben, befestigt sein, wobei für einen der Projektoren eine dieser Stellen das Zentrum für die Drehung des Projektors relativ zu seiner Platte bildet, wogegen für die beiden anderen Stellen in dieser Platte um das Zentrum bogenförmig verlaufende Öffnungen zum Hindurchtritt der Schrauben od. dgl. vorgesehen sind. Dadurch läßt sich auf einfache Weise einer der beiden Projektoren auf einer der Platten verdrehen und dadurch die optischen Achsen beider Projektoren in einer gemeinsamen Vertikalebene anordnen.

Um das Gestell mit den darauf fixierten Projektoren auf einfache Weise transportieren zu können, ist gemäß einem weiteren Merkmal der Erfindung am Quersteg ein Traggriff, vorzugsweise in der Mitte zwischen den beiden Projektoren, befestigt.

Gemäß einer bevorzugten Ausbildung der Erfindung besteht das von den Platten und dem Quersteg gebildete Traggestell einstückig aus biegsamem Material, z. B. Metallblech. Ein derartiges Gestell läßt sich auf einfache Weise herstellen, wobei durch die Biegsamkeit die Neigung der Plattenebenen relativ zueinander durch die Neigungsverstelleinrichtung verändert werden kann.

Eine zweckmäßige Ausführungsform ergibt sich dann, wenn beide Projektoren auf den Platten so befestigt sind, daß sie entgegen der Richtung der auslaufenden Arme des U-förmigen Traggestells projizieren, wobei für den Lichtstrahldurchtritt des unteren Projektors eine Öffnung im Quersteg vorhanden ist.

In der Zeichnung ist die Erfindung anhand eines Ausführungsbeispieles schematisch veranschaulicht. Fig. 1 zeigt ein erfindungsgemäßes Gestell in perspektiver Darstellung. Fig. 2 stellt die Unterseite der beiden Projektoren dar. Fig. 3 zeigt eine Draufsicht auf die eine und Fig. 4 auf die andere der beiden Platten des Gestells. Fig. 5 stellt schematisch das erfindungsgemäße Gestell zusammen mit den darauf befestgten Projektoren in Tragestellung dar. Fig. 6 zeigt eine Vorderansicht des Gestells. Fig. 7 verdeutlicht die Funktion der Neigungsverstelleinrichtung. Fig. 8 zeigt eine Ausführungsform einer solchen Neigungsverstelleinrichtung.

Das erfindungsgemäße Gestell 1 weist eine U-förmige Gestalt auf und besteht aus zwei die beiden Schenkel des U bildenden Platten 2, 3, die durch einen Quersteg 7 miteinander verbunden sind. Das Gestell 1 besteht hiebei aus einem biegsamen Material, beispielsweise aus einem Metallblech, dessen Stärke so gewählt ist, daß es das Gewicht der beiden Projektoren 4, 5 tragen kann, von welchen der Projektor 4 auf der Platte 2 und der Projektor 5 auf der Platte 3 aufruht. Der Abstand zwischen den Platten 2, 3 wird bestimmt von der Art der verwendeten Projektoren und muß so bemessen sein, daß ein Einsetzen bzw. Entnehmen des Diamagazins im Projektor 4 möglich ist.

An den dem Quersteg 7 gegenüberliegenden freien Enden der die Schenkel des U bildenden Platten 2, 3 ist eine später noch näher beschriebene Neigungsverstelleinrichtung befestigt, mit welcher die Neigung der beiden Platten 2, 3 relativ zueinander verändert werden kann.

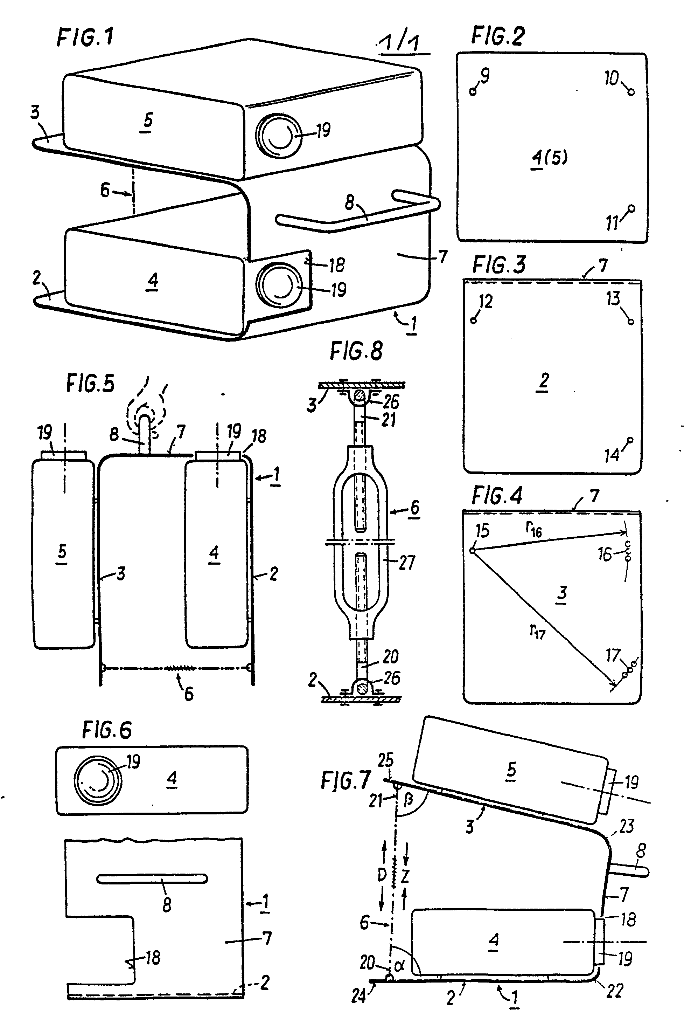

Am Quersteg 7 ist ein Traggriff 8 befestigt, der so bemessen ist, daß mit ihm das Gestell zusammen mit den darauf befestigten Diaprojektoren 4, 5 transportiert werden kann. Wie auch aus Fig. 5 hervorgeht, ist der Traggriff genau in der Mitte zwischen den beiden Projektoren 4, 5 montiert. Dadurch wird eine optimale Verteilung des Gewichtes der beiden Projektoren, wenn diese gleich ausgebildet sind, gewährleistet, so daß ein einfacher Transport in der in Fig. 5 angedeuteten Weise ermöglicht wird.

Zur Befestigung der Projektoren 4, 5 an den Platten 2, 3 sind, wie aus Fig. 2 hervorgeht, im Boden jedes Projektors an drei Stellen 9, 10, 11 Befestigungseinrichtungen vorgesehen, die beispielsweise aus Gewindelöchern oder Schraubenmuttern bestehen können, in welche entsprechende Öffnungen in den Platten 2, 3 durchsetzende Schrauben eingeschraubt werden können. Wenngleich drei solcher Befestigungseinrichtungen an den in Fig. 2 dargestellten Stellen zweckmäßig sind, so können auch mehrere oder auf andere Weise verteilte Befestigungseinrichtungen vorgesehen werden.

Wie aus Fig. 3 hervorgeht, weist die Platte 2 Befestigungsstellen 12, 13, 14 auf, die mit den Befestigungsstellen 9, 10, 11 am Boden des Diaprojektors 4 fluchten.

Fig. 4 zeigt die Befestigungeinrichtungen auf der Platte 3. Die mit der Befestigungseinrichtung 9 am Projektor 5 fluchtende Stelle 15 bildet ein Zentrum, um welches der Projektor 5 drehbar ist. An den mit den Befestigungseinrichtungen 10, 11 des Projektors 5 fluchtenden Stellen 16, 17 sind mehrere auf einem Kreisbogen um das Zentrum 15 angeordnete Befestigungseinrichtungen, beispielsweise drei Öffnungen vorgesehen, durch welche Schrauben hindurchgeführt werden können. Dadurch wird eine Verschiebung und Fixierung des Projektors 5 in der Ebene der Platte 3 um das Zentrum 15 ermöglicht, wie dies durch die Radien $r_{16}$ und $r_{17}$ angedeutet ist. Durch diese Drehung wird ermöglicht, Abweichungen in der horizontalen Deckung auf der Projektionsfläche der von den beiden Projektoren projezierten Bilder zu korrigieren. Bei entsprechend ausgebildeten Verbindungen zwischen dem Projektor 5 und der Platte 3 des Gestells 1 läßt sich eine solche Korrektur mit der Hand in einem einzigen Arbeitsvorgang durchführen.

Wie aus Fig. 6 hervorgeht, ist im Quersteg 7 ein Ausschnitt 18 angeordnet, um das Einsetzen und Justieren der Projektionsoptik 19 des Projektors 4 zu ermöglichen.

Fig. 7 zeigt die Funktion der Neigungsverstelleinrichtung 6. Um die Neigung der Platte 2 relativ zur Platte 3 zu verändern, werden die hinteren Ränder 24, 25 der Platten 2, 3 durch die Neigungsverstelleinrichtung 6 in Pfeilrichtung D auseinandergespreizt oder in Pfeilrichtung Z zusammengezogen. Hiezu wird am Rand 24 ein Element 20 der Neigungsverstelleinrichtung 6 und am Rand 25 ein Element 21 der Neigungsverstelleinrichtung 6 derart befestigt, daß sich der Winkel α zwischen dem Element 20 und der Platte 2 des Gestells 1 und der Winkel β zwischen dem Element 21 und der Platte 3 des Gestells 1 ändern können. Die Elemente 20, 21, welche etwa in der Mitte der Ränder 24, 25 festgelegt sind, werden hiebei zusammengezogen oder gespreizt.

Als Neigungsverstelleinrichtung kann beispielsweise eine wagenheberartige Konstruktion, eine Schere oder ein Spanner verwendet werden.

Eine bevorzugte Ausführung einer Neigungsverstelleinrichtung 6, welche als Spanner nach Art eines Kettenspanners ausgebildet ist, in in Fig. 8 im Detail dargestellt. An den Platten 2, 3 sind Bügel 26 befestigt, in die mit einem Gewinde versehen Bolzen eingehängt sind, welche die Elemente 20, 21 der Neigungsverstelleinrichtung (siehe Fig. 7) bilden. Diese Befestigung der Bolzen an den Platten 2, 3 ermöglicht eine Verschwenkung zwecks Änderung der Winkel α, β. Auf die Gewinde der beiden Elemente 20, 21 ist ein Spannschloß 27 aufgeschraubt, durch dessen Verdrehung die beiden von den Gewindebolzen gebildeten Elemente 20, 21 einander genähert oder voneinander entfernt werden können.

## Patentansprüche

1. Gestell (1) für eine Überblendeinrichtung für zwei Diamagazinprojektoren (4, 5), wobei die beiden Projektoren (4, 5) übereinander auf zwei Auflagern (2, 3) angeordnet sind, die in ihrer relativen Neigung zueinander durch eine Neigungsverstelleinrichtung (6) verstellbar sind, dadurch gekennzeichnet, daß das Auflager für jeden der beiden Projektoren (4, 5) von einer Platte (2, 3) gebildet ist, an der der Projektor (4, 5) befestigt ist, wobei einer (5) der beiden Projektoren um ein Zentrum (15) auf der Platte (3) drehbar und in der gewählten Lage befestigbar ist, und daß die beiden Platten (2, 3) durch einen sie verbindenden Quersteg (7) zu einem im Querschnitt U-förmigen Traggestell verbunden sind, wobei die Neigungsverstelleinrichtung (6) an den von den Platten (2, 3) gebildeten auslaufenden Armen des U-förmigen Traggestells angreift.

2. Gestell nach Anspruch 1, dadurch gekennzeichnet, daß die Neigungsverstelleinrichtung (6) eine wagenheberartige Konstruktion, eine Schere oder ein Spanner ist.

3. Gestell nach Anspruch 1 oder 2, dadurch gekennzeichnet, daß die Neigungsverstelleinrichtung (6) mittels Schellen oder Druckstücken mit Druckzapfen schwenkbar mit den Platten (2, 3) verbunden ist.

4. Gestell nach einem der Ansprüche 1 bis 3, dadurch gekennzeichnet, daß jeder der beiden Projektoren (4, 5) an seiner Platte (2, 3) an drei im Dreieck angeordneten Stellen (9, 10, 11), vorzugsweise mit Schrauben, befestigt ist, wobei für einen der Projektoren eine dieser Stellen das Zentrum (15) für die Drehung des Projektors (5) relativ zu seiner Platte (3) bildet, wogegen für die beiden anderen Stellen (10, 11) des Projektors in dieser Platte (3) um das Zentrum (15) bogenförmig verlaufende Öffnungen (16, 17) zum Hindurchtritt der Schrauben vorgesehen sind.

5. Gestell nach einem der Ansprüche 1 bis 4, dadurch gekennzeichnet, daß am Quersteg (7) ein Traggriff (8), vorzugsweise in der Mitte zwischen den beiden Projektoren (4, 5), befestigt ist.

6. Gestell nach einem der Ansprüche 1 bis 5, dadurch gekennzeichnet, daß das von den Platten (2, 3) und dem Quersteg (7) gebildeten Traggestell einstückig aus biegsamem Material, z. B. Metallblech, besteht.

7. Gestell nach einem der Ansprüche 1 bis 6, dadurch gekennzeichnet, daß beide Projektoren (4, 5) auf den Platten (2, 3) so befestigt sind, daß sie entgegen der Richtung der auslaufenden Arme de U-förmigen Traggestells projizieren, und daß für den Lichtstrahldurchtritt des unteren Projektors (4) eine Öffnung (18) im Quersteg (7) vorhanden ist.

## Claims

1. Frame (1) for a fading device for two slide magazine projectors (4, 5), the two projectors (4, 5) being arranged one above the other on two supports (2, 3) whose inclination relative to each other can be adjusted by an inclination adjustment device (6), characterised in that the support for each of the two projectors (4, 5) is formed by a plate (2, 3) to which the projector (4, 5) is fastened, one (5) of the two projectors being rotatable round a centre (15) on the plate (3) and fastenable in the selected position; and in that the two plates (2, 3) are connected, by a cross-piece (7) connecting them, to form a carrying frame having U-shaped cross-section, the inclination adjustment device (6) acting on the protruding arms, formed by the plates (2, 3), of the U-shaped carrying frame.

2. Frame according to claim 1, characterised in that the inclination adjustment device (6) is a structure like a vehicle jack, or a pair of shears or a vice.

3. Frame according to claim 1 or 2, characterised in that the inclination adjustment device (6) is swivellably connected with the plates (2, 3) by means of clips or pressure members with pressure pins.

4. Frame according to one of claims 1 to 3, characterised in that each of the two projectors (4, 5) is fastened, preferably with screws, to its plate (2, 3) at three points (9, 10, 11) arranged in a triangle, one of these points forming the centre (15) for the rotation of the projector (5) relative to its plate (3), whereas for the other two points (10, 11) of the projector, openings (16, 17) for the passage of the screws are provided in this plate (3) which run in a curve round the centre (15).

5. Frame according to any one of claims 1 to 4, characterised in that a carrying handle (8) is fastened to the cross-piece (7), preferably in the middle between the two projectors (4, 5).

6. Frame according to any one of claims 1 to 5, characterised in that the carrying frame formed by the plates (2, 3) and the cross-piece (7) consists of one piece of flexible material, e.g. sheet metal.

7. Frame according to any one of claims 1 to 6, characterised in that both projectors (4, 5) are fastened on the plates (2, 3) in such a way that they project in the opposite direction to the protruding arms of the U-shaped carrying frame, and in that an opening (18) is present in the cross-piece (7) for the passage of the light beam from the lower projector (4).

## Revendications

1. Châssis (1) pour un dispositif de fondu-enchaîné pour deux projecteurs de diapositives à magasin (4, 5), les deux projecteurs (4, 5) étant disposés l'un au-dessus de l'autre sur deux supports (2, 3) dont l'inclinaison relative l'un par rapport a l'autre peut être réglée par un dispositif de réglage de l'inclinaison (6), caractérisé par le fait que le support destiné à chacun des deux projecteurs (4, 5) est constitué par une plaque (2, 3) à laquelle est fixé le projecteur (4, 5), l'un (5) des deux projecteurs pouvant être tourné sur la plaque (3) autour d'un centre (15) et fixé dans la position choisie, et par le fait que les deux plaques (2, 3) sont reliées par une traverse (7) qui les relie en formant une structure porteuse dont la section transversale est en forme de U, le dispositif de réglage de l'inclinaison (6) étant en prise avec les bras en saillie de la structure porteuse en forme de U, bras qui sont constitués par les plaques (2, 3).

2. Châssis selon la revendication 1, caractérisé par le fait que le dispositif de réglage de l'inclinaison (6) est une construction analogue à un cric, un dispositif en ciseaux ou un tendeur.

3. Châssis selon la revendication 1 ou 2, caractérisé par le fait que le dispositif de réglage de l'inclinaison (6) est relié aux plaques (2, 3) de manière pivotante au moyen d'étriers ou d'organes de transmission de la pression comprenant des tourillons de pression.

4. Châssis selon l'une des revendications 1 à 3, caractérisé par le fait que chacun des deux projecteurs (4, 5) est fixé à sa plaque (2, 3), de préférence par des vis, en trois endroits (9, 10, 11) disposés en triangle, l'un de ces endroits constituant pour l'un des projecteurs le centre (15) destiné à la rotation du projecteur (5) par rapport à sa plaque (3), cependant qu'il est prévu dans cette plaque (3), pour les deux autres endroits (10, 11) du projecteur, des ouvertures (16, 17) s'étendant en arc autour du centre (15) et destinées au passage des vis.

5. Châssis selon l'une des revendications 1 à 4, caractérisé par le fait qu'une poignée de transport (8) est fixée à la traverse (7), de préférence au milieu des deux projecteurs (4, 5).

6. Châssis selon l'une des revendications 1 à 5, caractérisé par le fait que la structure porteuse constituée par les plaques (2, 3) et la traverse (7) se compose d'une seule pièce d'un matériau flexible, par exemple d'une tôle métallique.

7. Châssis selon l'une des revendications 1 à 6, caractérisé par le fait que les deux projecteurs (4, 5) sont fixés sur les plaques (2, 3) de telle manière qu'ils projettent dans la direction opposée aux bras en saillie de la structure porteuse en forme de U, et par le fait qu'une ouverture (18) est présente dans la traverse (7) pour le passage du faisceau lumineux du projecteur inférieur (4).

FIG.1

FIG.2

FIG.3

FIG.4

FIG.5

FIG.6

FIG.7

FIG.8